(19) **Europäisches Patentamt**
**European Patent Office**
**Office européen des brevets**

(11) **EP 2 955 694 A2**

(12) **EUROPEAN PATENT APPLICATION**

(43) Date of publication:
**16.12.2015 Bulletin 2015/51**

(51) Int Cl.:
***G06T 7/00*** (2006.01)

(21) Application number: **15170637.1**

(22) Date of filing: **04.06.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **13.06.2014 US 201414304138**

(71) Applicant: **Nokia Technologies Oy
02610 Espoo (FI)**

(72) Inventors:
- **Chang, Hoseok
  San Jose, CA 95134 (US)**
- **Mittal, Anish
  Berkeley, CA 94704 (US)**
- **Doppler, Klaus
  Albany, CA 94706 (US)**

(74) Representative: **Nokia Corporation
Intellectual Property Department
Karakaari 7
02610 Espoo (FI)**

(54) **METHOD, APPARATUS AND COMPUTER PROGRAM PRODUCT FOR IMAGE PROCESSING**

(57)     In an example embodiment, a method, apparatus and computer program product are provided. The method includes facilitating receipt of an image, and partitioning the image into a plurality of sub-images. The method further includes super-pixels in the plurality of sub-images, wherein determining the super-pixels includes determining a plurality of super-pixels in each sub-image of the plurality of sub-images. An image graph including a plurality of connections between the super-pixels is determined, wherein a connection of the plurality of connections is determined between a first super-pixel and a second super-pixel. The first super-pixel belongs to a sub-image and the second super-pixel belongs to the sub-image or a neighboring sub-image of the sub-image located in an immediate vicinity of the sub-image in the image.

FIGURE 3C

**Description**

**TECHNICAL FIELD**

Various implementations relate generally to method, apparatus, and computer program product for image processing.

**BACKGROUND**

Various electronic devices such as cameras, mobile phones, and other devices are used for capturing multimedia content, such as images and videos of a scene. The captured multimedia content may be processed for use in a variety of applications. Examples of such applications include disparity estimation, depth estimation, object recognition and the like in the multimedia content. These applications make use of several image segmentation techniques for segmentation of the multimedia content (for example, images) into discrete pixel groups and construction of graph data structure to aid and enhance further image processing. Although, electronic devices are capable of supporting applications that facilitate in performing such processing of the captured multimedia content; however, such post processing applications involve intensive computations and are memory intensive.

**SUMMARY OF SOME EMBODIMENTS**

Various aspects of examples embodiments are set out in the claims.

In a first aspect, there is provided a method comprising: facilitating receipt of an image of a scene; partitioning the image into a plurality of sub-images; determining super-pixels in the plurality of sub-images, wherein determining the super-pixels comprises determining a plurality of super-pixels in each sub-image of the plurality of sub-images; and determining an image graph comprising a plurality of connections between the super-pixels, wherein a connection of the plurality of connections is determined between a first super-pixel and a second super-pixel, the first super-pixel belonging to a sub-image and the second super-pixel belonging to the sub-image or a neighboring sub-image of the sub-image, the neighboring sub-image being located in an immediate vicinity of the sub-image in the image.

In a second aspect, there is provided an apparatus comprising: at least one processor; and at least one memory comprising computer program code, the at least one memory and the computer program code configured to, with the at least one processor, cause the apparatus to perform at least: facilitate receipt of an image of a scene; partition the image into a plurality of sub-images; determine super-pixels in the plurality of sub-images, wherein determining the super-pixels comprises determining a plurality of super-pixels in each sub-image of the plurality of sub-images; and determine an image graph comprising a plurality of connections between the super-pixels, wherein a connection of the plurality of connections is determined between a first super-pixel and a second super-pixel, the first super-pixel belonging to a sub-image and the second super-pixel belonging to the sub-image or a neighboring sub-image of the sub-image, the neighboring sub-image being located in an immediate vicinity of the sub-image in the image.

In a third aspect, there is provided a computer program product comprising at least one computer-readable storage medium, the computer-readable storage medium comprising a set of instructions, which, when executed by one or more processors, cause an apparatus to at least perform: facilitate receipt of an image of a scene; partition the image into a plurality of sub-images; determine super-pixels in the plurality of sub-images, wherein determining the super-pixels comprises determining a plurality of super-pixels in each sub-image of the plurality of sub-images; and determine an image graph comprising a plurality of connections between the super-pixels, wherein a connection of the plurality of connections is determined between a first super-pixel and a second super-pixel, the first super-pixel belonging to a sub-image and the second super-pixel belonging to the sub-image or a neighboring sub-image of the sub-image, the neighboring sub-image being located in an immediate vicinity of the sub-image in the image.

In a fourth aspect, there is provided an apparatus comprising: means for facilitating receipt of an image of a scene; means for partitioning the image into a plurality of sub-images; means for determining super-pixels in the plurality of sub-images, wherein determining the super-pixels comprises determining a plurality of super-pixels in each sub-image of the plurality of sub-images; and means for determining an image graph comprising a plurality of connections between the super-pixels, wherein a connection of the plurality of connections is determined between a first super-pixel and a second super-pixel, the first super-pixel belonging to a sub-image and the second super-pixel belonging to the sub-image or a neighboring sub-image of the sub-image, the neighboring sub-image being located in an immediate vicinity of the sub-image in the image.

In a fifth aspect, there is provided a computer program comprising program instructions which when executed by an apparatus, cause the apparatus to: facilitate receipt of an image of a scene; partition the image into a plurality of sub-images; determining super-pixels in the plurality of sub-images, wherein determining the super-pixels comprises determining a plurality of super-pixels in each sub-image of the plurality of sub-images; and determining an image graph comprising a plurality of connections between the super-pixels, wherein a connection of the plurality of connections is determined between a first super-pixel and a second super-pixel, the first super-pixel belonging to a sub-image and the second super-pixel belonging to the sub-image or a neighboring sub-image of the sub-image, the neighboring sub-image being located in an immediate vicinity of the sub-image in the image.

## BRIEF DESCRIPTION OF THE FIGURES

Various embodiments are illustrated by way of example, and not by way of limitation, in the figures of the accompanying drawings in which:

FIGURE 1 illustrates a device, in accordance with an example embodiment;

FIGURE 2 illustrates an apparatus for image processing, in accordance with an example embodiment;

FIGURE 3A illustrates an example representation of an image being processed for segmentation and image graph generation, in accordance with an example embodiment;

FIGURES 3B and 3C illustrate example representations of segmentation and image graph generation, respectively corresponding to the image of FIGURE 3A, in accordance with an example embodiment;

FIGURE 4 is a flowchart depicting an example method for image processing, in accordance with an example embodiment;

FIGURES 5A and 5B is a flowchart depicting an example method for image processing, in accordance with another example embodiment; and

FIGURE 6 illustrates an example block diagram representing a multiprocessing platform for image processing, in accordance with an example embodiment.

## DETAILED DESCRIPTION

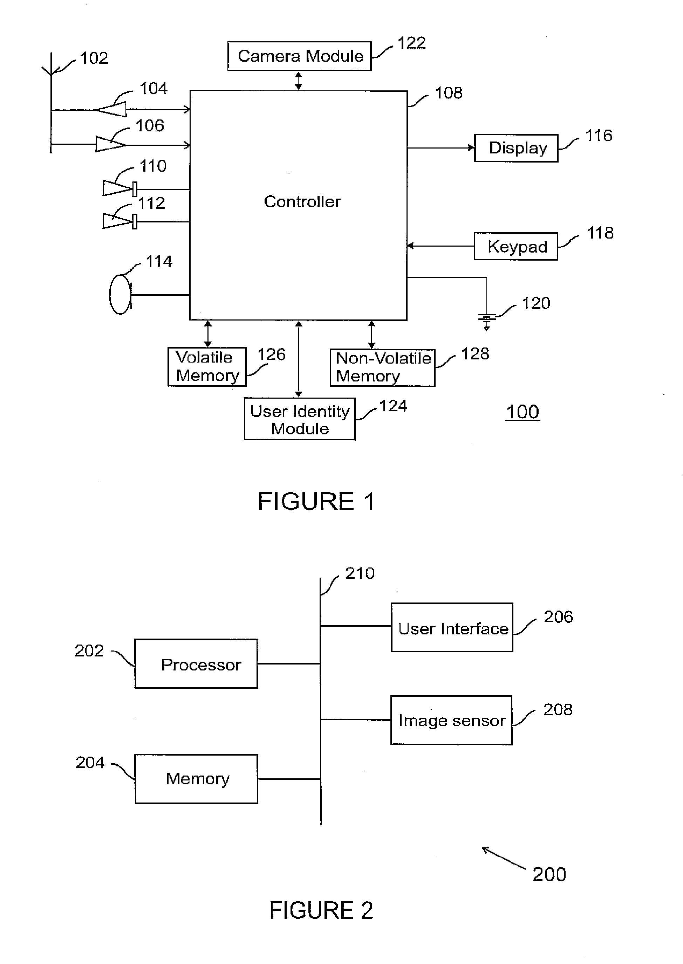

Example embodiments and their potential effects are understood by referring to FIGURES 1 through 6 of the drawings.

FIGURE 1 illustrates a device 100 in accordance with an example embodiment. It should be understood, however, that the device 100 as illustrated and hereinafter described is merely illustrative of one type of device that may benefit from various embodiments, therefore, should not be taken to limit the scope of the embodiments. As such, it should be appreciated that at least some of the components described below in connection with the device 100 may be optional and thus in an example embodiment may include more, less or different components than those described in connection with the example embodiment of FIGURE 1. The device 100 could be any of a number of types of mobile electronic devices, for example, portable digital assistants (PDAs), pagers, mobile televisions, gaming devices, cellular phones, all types of computers (for example, laptops, mobile computers or desktops), cameras, audio/video players, radios, global positioning system (GPS) devices, media players, mobile digital assistants, or any combination of the aforementioned, and other types of communications devices.

The device 100 may include an antenna 102 (or multiple antennas) in operable communication with a transmitter 104 and a receiver 106. The device 100 may further include an apparatus, such as a controller 108 or other processing device that provides signals to and receives signals from the transmitter 104 and receiver 106, respectively. The signals may include signaling information in accordance with the air interface standard of the applicable cellular system, and/or may also include data corresponding to user speech, received data and/or user generated data. In this regard, the device 100 may be capable of operating with one or more air interface standards, communication protocols, modulation types, and access types. By way of illustration, the device 100 may be capable of operating in accordance with any of a number of first, second, third and/or fourth-generation communication protocols or the like. For example, the device 100 may be capable of operating in accordance with second-generation (2G) wireless communication protocols IS-136 (time division multiple access (TDMA)), GSM (global system for mobile communication), and IS-95 (code division multiple access (CDMA)), or with third-generation (3G) wireless communication protocols, such as Universal Mobile Telecommunications System (UMTS), CDMA1000, wideband CDMA (WCDMA) and time division-synchronous CDMA (TD-SCDMA), with 3.9G wireless communication protocol such as evolved- universal terrestrial radio access network (E-UTRAN), with fourth-generation (4G) wireless communication protocols, or the like. As an alternative (or additionally), the device 100 may be capable of operating in accordance with non-cellular communication mechanisms. For example, computer networks such as the Internet, local area network, wide area networks, and the like; short range wireless communication networks such as include Bluetooth® networks, Zigbee® networks, Institute of Electric and Electronic Engineers (IEEE) 802.11x networks, and the like; wireline telecommunication networks such as public switched telephone network (PSTN).

The controller 108 may include circuitry implementing, among others, audio and logic functions of the device 100. For example, the controller 108 may include, but are not limited to, one or more digital signal processor devices, one or more microprocessor devices, one or more processor(s) with accompanying digital signal processor(s), one or more processor(s) without accompanying digital signal processor(s), one or more special-purpose computer chips, one or more field-programmable gate arrays (FPGAs), one or more controllers, one or more application-specific integrated circuits (ASICs), one or more computer(s), various analog to digital converters, digital to analog converters, and/or other support circuits. Control and signal processing functions of the device 100 are allocated between these devices according to their respective capabilities. The controller 108 thus may also include the functionality to convolutionally encode and interleave message and data prior to modulation and transmission. The controller 108 may additionally include an internal voice coder, and may include an internal data modem. Further, the controller 108 may include functionality to operate one or more software programs, which may be stored in a memory. For example, the controller 108 may be capable of operating a connectivity program, such as a conventional Web browser. The connectivity program may then allow the device 100 to transmit and receive Web content, such as location-based content and/or other web page content, according to a Wireless Application Protocol (WAP), Hypertext Transfer Protocol (HTTP) and/or the like. In an example embodiment, the controller 108 may be embodied as a multi-core processor such as a dual or quad core processor. However, any number of processors may be included in the controller 108.

The device 100 may also comprise a user interface including an output device such as a ringer 110, an earphone or speaker 112, a microphone 114, a display 116, and a user input interface, which may be coupled to the controller 108. The user input interface, which allows the device 100 to receive data, may include any of a number of devices allowing the device 100 to receive data, such as a keypad 118, a touch display, a microphone or other input device. In embodiments including the keypad 118, the keypad 118 may include numeric (0-9) and related keys (#, *), and other hard and soft keys used for operating the device 100. Alternatively or additionally, the keypad 118 may include a conventional QWERTY keypad arrangement. The keypad 118 may also include various soft keys with associated functions. In addition, or alternatively, the device 100 may include an interface device such as a joystick or other user input interface. The device 100 further includes a battery 120, such as a vibrating battery pack, for powering various circuits that are used to operate the device 100, as well as optionally providing mechanical vibration as a detectable output.

In an example embodiment, the device 100 includes a media capturing element, such as a camera, video and/or audio module, in communication with the controller 108. The media capturing element may be any means for capturing an image, video and/or audio for storage, display or transmission. In an example embodiment in which the media capturing element is a camera module 122, the camera module 122 may include a digital camera capable of forming a digital image file from a captured image. As such, the camera module 122 includes all hardware, such as a lens or other optical component(s), and software for creating a digital image file from a captured image. Alternatively, the camera module 122 may include the hardware needed to view an image, while a memory device of the device 100 stores instructions for execution by the controller 108 in the form of software to create a digital image file from a captured image. In an example embodiment, the camera module 122 may further include a processing element such as a co-processor, which assists the controller 108 in processing image data and an encoder and/or decoder for compressing and/or decompressing image data. The encoder and/or decoder may encode and/or decode according to a JPEG standard format or another like format. For video, the encoder and/or decoder may employ any of a plurality of standard formats such as, for example, standards associated with H.261, H.262/ MPEG-2, H.263, H.264, H.264/MPEG-4, MPEG-4, and the like. In some cases, the camera module 122 may provide live image data to the display 116. Moreover, in an example embodiment, the display 116 may be located on one side of the device 100 and the camera module 122 may include a lens positioned on the opposite side of the device 100 with respect to the display 116 to enable the camera module 122 to capture images on one side of the device 100 and present a view of such images to the user positioned on the other side of the device 100.

The device 100 may further include a user identity module (UIM) 124. The UIM 124 may be a memory device having a processor built in. The UIM 124 may include, for example, a subscriber identity module (SIM), a universal integrated circuit card (UICC), a universal subscriber identity module (USIM), a removable user identity module (R-UIM), or any other smart card. The UIM 124 typically stores information elements related to a mobile subscriber. In addition to the UIM 124, the device 100 may be equipped with memory. For example, the device 100 may include volatile memory 126, such as volatile random access memory (RAM) including a cache area for the temporary storage of data. The device 100 may also include other non-volatile memory 128, which may be embedded and/or may be removable. The non-volatile memory 128 may additionally or alternatively comprise an electrically erasable programmable read only memory (EEPROM), flash memory, hard drive, or the like. The memories may store any number of pieces of information, and data, used by the device 100 to implement the functions of the device 100.

FIGURE 2 illustrates an apparatus 200 for image processing, in accordance with an example embodiment.

The apparatus 200 may be employed, for example, in the device 100 of FIGURE 1. However, it should be noted that the apparatus 200, may also be employed on a variety of other devices both mobile and fixed, and therefore, embodiments should not be limited to application on devices such as the device 100 of FIGURE 1. Alternatively, embodiments may be employed on a combination of devices including, for example, those listed above. Accordingly, various embodiments may be embodied wholly at a single device, for example, the device 100 or in a combination of devices. Furthermore, it should be noted that the devices or elements described below may not be mandatory and thus some may be omitted in certain embodiments.

The apparatus 200 includes or otherwise is in communication with at least one processor 202 and at least one memory 204. In an example embodiment, the at least one processor 202 may include a plurality of processors and the at least one memory 204 may include a plurality of memory. In an example embodiment, the plurality of processors and the plurality of memory may be embodied on a multiprocessor processor platform that may facilitate in parallel processing of a plurality of sub-images associated with the image. Hereinafter, the terms at least one processor, plurality of processors/processing units, and the processor may refer to one or more processors that may facilitate in processing of the plurality of sub-images of the image. Also, the terms at least one memory, plurality of memory/ memory units, and the memory may refer to one or more memory that may facilitate in storing information associated with the plurality of sub-images for the facilitating processing of the plurality of sub-images of the image. Examples of the at least one memory 204 include, but are not limited to, volatile and/or non-volatile memories. Some examples of the volatile memory include, but are not limited to, random access memory, dynamic random access memory, static random access memory, and the like. Some examples of the non-volatile memory include, but are not limited to, hard disks, magnetic tapes, optical disks, programmable read only memory, erasable programmable read only memory, electrically erasable programmable read only memory, flash memory, and the like. The memory 204 may be configured to store information, data, applications, instructions or the like for enabling the apparatus 200 to carry out various functions in accordance with various example embodiments. For example, the memory 204 may be configured to buffer input data comprising media content for processing by the processor 202. Additionally or alternatively, the memory 204 may be configured to store instructions for execution by the processor 202.

An example of the processor 202 may include the controller 108. The processor 202 may be embodied in a number of different ways. The processor 202 may be embodied as a multi-core processor, a single core processor; or combination of multi-core processors and single core processors. For example, the processor 202 may be embodied as one or more of various processing means such as a coprocessor, a microprocessor, a controller, a digital signal processor (DSP), processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like. In an example embodiment, the multi-core processor may be configured to execute instructions stored in the memory 204 or otherwise accessible to the processor 202. Alternatively or additionally, the processor 202 may be configured to execute hard coded functionality. As such, whether configured by hardware or software methods, or by a combination thereof, the processor 202 may represent an entity, for example, physically embodied in circuitry, capable of performing operations according to various embodiments while configured accordingly. For example, if the processor 202 is embodied as two or more of an ASIC, FPGA or the like, the processor 202 may be specifically configured hardware for conducting the operations described herein. Alternatively, as another example, if the processor 202 is embodied as an executor of software instructions, the instructions may specifically configure the processor 202 to perform the algorithms and/or operations described herein when the instructions are executed. However, in some cases, the processor 202 may be a processor of a specific device, for example, a mobile terminal or network device adapted for employing embodiments by further configuration of the processor 202 by instructions for performing the algorithms and/or operations described herein. The processor 202 may include, among other things, a clock, an arithmetic logic unit (ALU) and logic gates configured to support operation of the processor 202.

A user interface 206 may be in communication with the processor 202. Examples of the user interface 206 include, but are not limited to, input interface and/or output interface. The input interface is configured to receive an indication of a user input. The output user interface provides an audible, visual, mechanical or other output and/or feedback to the user. Examples of the input interface may include, but are not limited to, a keyboard, a mouse, a joystick, a keypad, a touch screen, soft keys, and the like. Examples of the output interface may include, but are not limited to, a display such as light emitting diode display, thin-film transistor (TFT) display, liquid crystal displays, active-matrix organic light-emitting diode (AMOLED) display, a microphone, a speaker, ringers, vibrators, and the like. In an example embodiment, the user interface 206 may include, among other devices or elements, any or all of a speaker, a microphone, a display, and a keyboard, touch screen, or the like. In this regard, for example, the processor 202 may comprise user interface circuitry configured to control at least some functions of one or more elements of the user interface 206, such as, for example, a speaker, ringer, microphone, display, and/or the like. The processor 202 and/or user interface circuitry comprising the processor 202 may be configured to control one or more functions of one or more elements of the user interface 206 through computer program instructions, for example, software and/or firmware, stored on a memory, for example, the at least one memory 204, and/or the like, accessible to the processor 202.

In an example embodiment, the apparatus 200 may include an electronic device. Some examples of the electronic device include communication device, media capturing device with or without communication capabilities, computing devices, and the like. Some examples of the electronic device may include a mobile phone, a personal digital assistant (PDA), and the like. Some examples of computing device may include a laptop, a personal computer, and the like. In an example embodiment, the electronic device may include a user interface, for example, the user interface 206, having user interface circuitry and user interface software configured to facilitate a user to control at least one function of the electronic device through use of a display and further configured to respond to user inputs. In an example embodiment, the electronic device may include a display circuitry configured to display at least a portion of the user interface 206 of the electronic device. The display and display circuitry may be configured to facilitate the user to control at least one function of the electronic device.

In an example embodiment, the electronic device may be embodied as to include a transceiver. The transceiver may be any device operating or circuitry operating in accordance with software or otherwise embodied in hardware or a combination of hardware and software. For example, the processor 202 operating under software control, or the processor 202 embodied as an ASIC or FPGA specifically configured to perform the operations described herein, or a combination thereof, thereby configures the apparatus or circuitry to perform the functions of the transceiver. The transceiver may be configured to receive media content. Examples of the media content may include audio content, video content, data, and a combination thereof.

In an example embodiment, the electronic device may be embodied to include one or more image sensors 208 for capturing the multimedia content associated with the scene. In an example embodiment, the multimedia content may include images, video, and the like. In an example embodiment, the one or more sensors image 208 may be embodied to include multiple camera components for capturing the multimedia content associated with the scene. In an example embodiment, the one or more sensors image 208 may be in communication with the processor 202 and/or other components of the apparatus 200. The one or more sensors image 208 may be in communication with other imaging circuitries and/or software, and is configured to capture digital images or to make a video or other graphic media files. The one or more sensors image 208 and other circuitries, in combination, may be an example of at least one camera module such as the camera module 122 of the device 100.

These components (202-208) may communicate to each other via a centralized circuit system 210 to facilitate processing of the captured multimedia content. The centralized circuit system 210 may be various devices configured to, among other things, provide or enable communication between the components (202-208) of the apparatus 200. In certain embodiments, the centralized circuit system 210 may be a central printed circuit board (PCB) such as a motherboard, main board, system board, or logic board. The centralized circuit system 210 may also, or alternatively, include other printed circuit assemblies (PCAs) or communication channel media.

In an example embodiment, the processor 202 is configured to, with the content of the memory 204, and optionally with other components described herein, to cause the apparatus 200 to facilitate receipt of a multimedia content. In an example embodiment, the multimedia content may include an image or a video content associated with a scene. Herein, for the simplicity of description, various embodiments have been explained by assuming an image as an example of the multimedia content. However, in various embodiments, the video content may be the example of the multimedia content. Herein, the 'scene' refers to arrangement (for example, natural, manmade, sorted or assorted) of one or more objects of which the images or videos can be captured, or of which the preview can be generated. In this example embodiment, the multimedia content, for example the image may be captured by a camera that may be present in the apparatus 200. In another example embodiment, the apparatus 200 may be caused to send instructions for capturing of the image of the scene by an external camera that is accessible/communicably coupled to the apparatus 200. In some example embodiments, the image may be prerecorded or stored in an apparatus 200, or may be received from sources external to the apparatus 200. In such example embodiments, the apparatus 200 is caused to receive the image from external storage medium such as DVD, Compact Disk (CD), flash drive, memory card, or from external storage locations through Internet, Bluetooth®, and the like. In an example embodiment, a processing means may be configured to facilitate capture of the image of the scene. An example of the processing means may include the processor 202, which may be an example of the controller 108, and/or one or more sensors 208.

In some other embodiments, the one or more image sensors 208 may be configured outside the apparatus 200, and may facilitate capture of the image. For example, in some example embodiments, the apparatus 200 may be caused to send instructions for capturing the image of the scene by an external camera, that is accessible/communicably coupled to the apparatus 200. In an example embodiment, a processing means may be configured to facilitate receipt of the image associated with the scene. An example of the processing means may include the processor 202, which may be an example of the controller 108, and/or the one or more image sensors 208.

In an example embodiment, the apparatus 200 may be caused to partition the image into a plurality of sub-images. In an example embodiment, the plurality of sub-images may include grids, tiles and the like. In an example embodiment, the image may be partitioned to include a plurality of horizontal rows of the sub-images. In another example embodiment, the image may be partitioned to include a plurality of vertical columns of the sub-images. In an example embodiment, the plurality of sub-images may be of equal size. In an example embodiment, the plurality of sub-images may be of unequal sizes. In an example embodiment, the apparatus 200 may be caused to partition the image into the plurality of sub-images in any suitable orientation and/or size. In an example embodiment, a processing means may be configured to partition the image into the plurality of sub-images. An example of the processing means may include the processor 202, which may be an example of the controller 108.

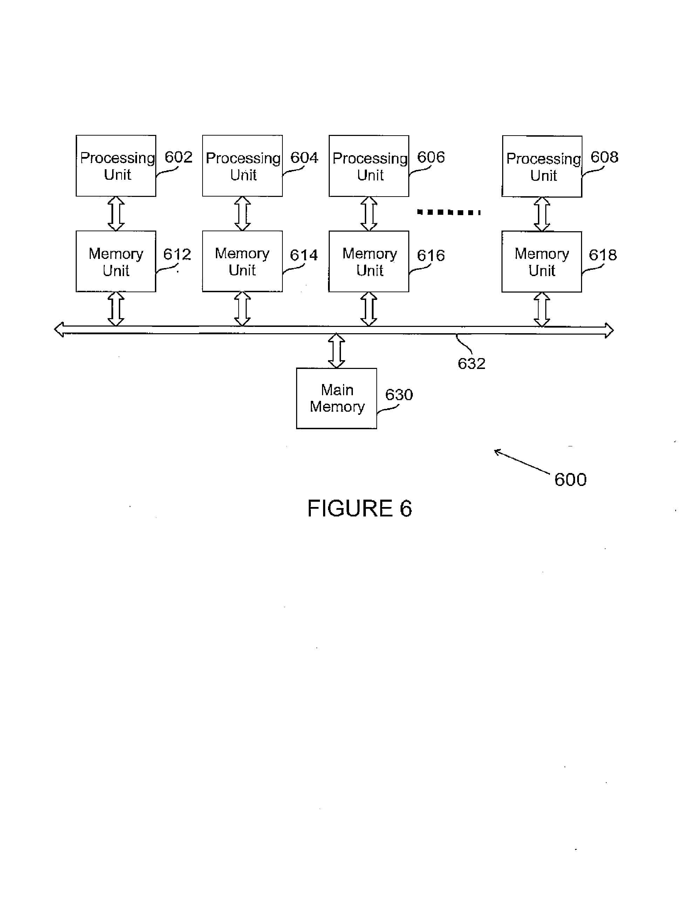

In some example embodiments, the apparatus 200 may be caused to partition the image into the plurality of sub-images based at least on a complexity associated with the image. For example, in case of a complex image, a working memory required for storing the plurality of sub-images may be more as compared to the image that may not be complex. In another example embodiment, a number of sub-images into which the image may be partitioned may be determined based on the size of memory associated with the apparatus 200. For example, for a larger number of sub-images, the size of the sub-images may be small and accordingly the working memory required for storing smaller sub-images may be less as compared to the working memory required for storing larger sub-images. Herein, the term 'working memory' may refer to a memory associated with a processor in a parallel processing system that may be incorporated in an apparatus, such as the apparatus 200. Additionally or alternatively, the apparatus 200 may be caused to partition the image into the plurality of sub-images based on memory associated with the respective plurality of processors of a multi-core processor of the apparatus 200. In an embodiment, for the plurality of processors with large sized corresponding memories, the image may be partitioned into lesser number of sub-images. In an example embodiment, a multi-core processor may be an example of a parallel processing system. An example of a parallel processing system (multiprocessing platform) in accordance with an example embodiment is explained in detail with reference to FIGURE 6.

In an example embodiment, the apparatus 200 may be caused to perform an individual processing of each of the plurality of sub-images. In an example embodiment, the individual processing of the plurality of sub-images may facilitate in reduced working memory size and number of computations in multi-processor platforms, thereby increasing the efficiency of a system working on such platforms. In an example embodiment, the individual processing of each of the plurality of sub-images may be performed concurrently or sequentially. In an example embodiment, the individual processing of each of the plurality of sub-images facilitates in determining/defining super-pixels in the respective sub-images of the plurality of sub-images. In an example embodiment, a sub-image of the plurality of sub-images may include a plurality of pixels, such that the processing of the sub-image may facilitate in defining a plurality of super-pixels in the sub-image. Herein the term 'super-pixel' may include a region in the image having a group of similar pixels that may define a meaningful region. In an example embodiment, different sets of neighboring pixels may be grouped to generate the plurality of pixel groups or super-pixels. For instance, a super-pixel may be a group of 100 neighboring pixels (that may be combined to form a closed boundary), and the plurality of such super-pixels may be generated in an image or a frame of a video content. The super-pixels facilitate in reducing the complexity of various image and/or video processing tasks. In an example embodiment, a processing means may be configured to define the plurality of super-pixels in the sub-image of the image. An example of the processing means may include the processor 202, which may be an example of the controller 108.

In an example embodiment, defining the plurality of super-pixels in the sub-image of the plurality of sub-images may facilitate in segmenting the sub-image into the plurality of super-pixels. In an example embodiment, segmenting the sub-image may include assigning corresponding super-pixel labels to the plurality of pixels of the sub-images such that the pixels with the same super-pixel label may have same visual characteristics. In an example embodiment, for performing segmentation of the sub-image into the plurality of super-pixels, the apparatus 200 is caused to perform an initial segmentation of the sub-image into a plurality of initial super-pixels.

In an example embodiment, the apparatus 200 is caused to perform an initial segmentation of the sub-image by randomly initializing a plurality of initial super-pixels in the sub-image. In an example embodiment, the apparatus 200 may be caused to randomly generate/initialize the initial segmentation of the sub-image based at least on a characterization of a visual appearance of the super-pixels in the sub-image. For example, the pixels of a super-pixel may be similar with respect to at least one visual property, for example, color, texture, intensity, and the like. In an example embodiment, the visual appearance of super-pixels in the sub-image may be determined based on feature descriptors associated with the super-pixels of the sub-image. In an example embodiment, the feature descriptors may define the characteristic and/or quality of a super-pixel. For instance, a super-pixel may have a texture that is different from another super-pixel and the texture (for example, a texton histogram (TH)) may be used to distinguish the super-pixel from other super-pixels. In an example scenario, a texton-based texture classifier may be utilized to classify textures based on their texton frequency histograms. Additionally or alternatively, in an example embodiment, a color histogram (CH) of pixels and/or mean color value of pixels in a super-pixel may be computed to determine the feature descriptor for that super-pixel. In an example embodiment, the TH and the CH may be concatenated to form a single feature vector for each super-pixel. In an example embodiment, a processing means may be configured to perform the initial segmentation of the sub-image. An example of the processing means may include the processor 202, which may be an example of the controller 108.

In an example embodiment, the apparatus 200 is further caused to assign an initial super-pixel label to a respective pixel of the plurality of pixels associated with the sub-image. In an example embodiment, the apparatus 200 is caused to assign the initial super-pixel labels to the respective plurality of pixels in a random manner. In an example embodiment, the apparatus 200 is caused to assign the initial super-pixel label to the respective plurality of pixels of the sub-image based on a visual characteristic of the respective plurality of pixels. In an example embodiment, assigning the initial super-pixel labels to the respective plurality of pixels may include classifying the respective plurality of pixels into one or more categories based on the corresponding visual characteristics. In an example embodiment, a processing means may be configured to assign the initial super-pixel label to the respective pixel of the plurality of pixels associated with the sub-image. An example of the processing means may include the processor 202, which may be an example of the controller 108.

In an example embodiment, the apparatus 200 is further caused to determine a respective central location of the initial plurality of super-pixels associated with the sub-image. In an example embodiment, the respective central location (or centroid) of a super-pixel of the initial plurality of super-pixels may be determined based at least on a location of a centrally located pixel in the super-pixel. In an example embodiment, the apparatus 200 is further caused to determine an average color value at the central location of the super-pixel. In an example embodiment, the apparatus 200 may be caused to determine an average color value at the central location of the super-pixel based on the color value of a pixel located at the central location (or centroid) of the super-pixel. In an example embodiment, the apparatus 200 is caused to assign the color value of the pixel located at the central location of the super-pixel to that super-pixel.

In an example embodiment, the apparatus 200 is further caused to iteratively update corresponding initial super-pixel labels assigned to the plurality of pixels associated with the sub-image. In an example embodiment, the apparatus 200 is caused to update the corresponding initial super-pixel labels assigned to the plurality of pixels by iteratively identifying nearest initial super-pixels associated with the pixels of the plurality of pixels, and updating the location information and color values associated with the identified initial super-pixels. In an example embodiment, the apparatus 200 is caused to iteratively identify nearest initial super-pixels associated with each of the plurality of initial super-pixels. In an example embodiment, the nearest initial super-pixels associated with each pixel of the plurality pixels of the sub-image may be determined based on a distance of the pixel with one or more surrounding initial super-pixels, where the one or more surrounding initial super-pixels may be located in the sub-image or a neighboring sub-image located in an immediate vicinity of the sub-image.

As used herein, the term "distance" between two pixels may refer to a measured dissimilarity between the two pixels, for example, the current pixel and a pixel associated with the one or more surrounding initial super-pixels. In an example embodiment, a 'Euclidean distance' may represent a measurement of the dissimilarity in the location of two pixels. In an example scenario, when the two pixels are adjacent to each other, the Euclidean distance between them may be represented as 1. Euclidean distance may be calculated by the standard method of using the Pythagorean theorem. In various embodiments, instead of Euclidean distance, other distance metrics may also be used for computing the distance between the two pixels, for example, a RGB color distance may represents the dissimilarity between the color values of two pixels, or a Bhattacharyya distance which represents the dissimilarity between the surrounding two pixels. In various embodiments, the distance between the two pixels may be representative of one or more dissimilarity metrics between the two pixels. In an example embodiment, the distance between the two pixels may be represented by the following expression:

$$d = d1 + d2*weight$$

where,

$d1$ may represent a spatial (or Euclidean) distance between the two pixels;
$d2$ may represent a RGB color (or texture feature) distance between the two pixels; and
*weight* may be representative of weight metric between spatial difference or feature difference. In some embodiments, the weight may govern compactness of super-pixels. For example, assigning a low value of weight may lead to more compact pixels in the super-pixels, whereas assigning higher weight value may lead to generation of super-pixels which may contains pixels with similar values but are not necessarily compact. The compactness of the super-pixels may depend on the applications for which the super-pixels would be utilized. In some example embodiments, the weight may be decided based on the complexity of the scene (image). For example, in case of higher weight (e.g., more weight on feature difference) more complex and irregular looking super-pixels (segments) may be generated, while in case of lower weight (e.g., more weight on spatial distance) more regular shaped super pixels may be generated.

In an example embodiment, the apparatus 200 is caused to determine, for a pixel of the plurality of pixels associated with the current sub-image, a minimum distance indicative of a distance of the pixel with a nearest super-pixel of the plurality of surrounding super-pixels. In an example embodiment, the distance between the pixel and a surrounding super-pixel of the plurality of surrounding super-pixels is computed as a distance between the pixel and a central pixel of the surrounding super-pixel.

In an example embodiment, the apparatus 200 is caused to determine, for a pixel of the plurality of pixels associated with the sub-image, a set of distances between the pixel and one or more surrounding initial super-pixels of the plurality of initial super-pixels. In an example embodiment, the apparatus 200 is caused to determine the distance between the pixel and the surrounding initial super-pixel based at least on one of color values and location information associated with the pixel and the neighboring initial super-pixel.

In an example embodiment, the apparatus 200 is caused to determine, based on the set of distances, a nearest initial super-pixel from the one or more surrounding initial super-pixels, where the nearest initial super-pixel may be closest to the pixel. In some embodiments, the apparatus 200 is caused to compare the distances of the set of distance with a threshold distance, and based on the comparison, the apparatus 200 may be caused to determine the nearest initial super-pixel associated with the pixel. In an example embodiment, the apparatus 200 may be caused to set a value for the minimum distance associated with the pixels of the plurality of pixels to a high value. In an example embodiment, the apparatus 200 is caused to update a distance between the nearest initial super-pixel and the pixel as a minimum super-pixel distance corresponding to the pixel. In an example embodiment, a processing means may be configured to determine the nearest initial super-pixel from the one or more surrounding initial super-pixels. An example of the processing means may include the processor 202, which may be an example of the controller 108.

In an example embodiment, the apparatus 200 is further caused to associate the pixel with the nearest initial super-pixel upon updating the distance between the nearest initial super-pixel and the pixel. In an example embodiment, associating the pixel with the nearest initial super-pixel includes updating the location of the initial super-pixel by averaging the location of pixels contained in the initial super-pixel. Additionally or alternately, in an example embodiment, associating the pixel to the initial super-pixel includes updating the color value of the initial super-pixel based on the color values of the pixels in the initial super-pixel. In an example embodiment, the apparatus 200 may be caused to iteratively determine, for the plurality of pixels of the sub-image, the surrounding super-pixel to which the pixel belongs. In an embodiment, in every iteration the apparatus 200 may update the super-pixel labels assigned to every pixel followed by the updating of the location of the initial super-pixel. In an example embodiment, updating the nearest super-pixel associated with a pixel of the plurality of pixels facilitates in defining a super-pixel of the plurality of super-pixels associated with the sub-image.

In an example embodiment, the apparatus 200 may be caused to perform the super-pixel segmentation of the plurality of sub-image individually, thereby avoiding the dependency between the super-pixels of adjoining sub-images during the segmentation process. In some embodiments, due to the super-pixel segmentation of the plurality of sub-images being performed individually, the apparatus 200 may facilitate in parallelization of the process of the image segmentation, for example by using multi-processor platforms. An example of a multi-processor platform is illustrated and described with reference to FIGURE 6.

In an example embodiment, the segmentation of the sub-images into the plurality of super-pixels, as described herein may be utilized in a variety of applications such as disparity estimation, depth estimation, object recognition and the like. In an example embodiment, partitioning the image into sub-images, and thereafter processing of individual sub-images into a respective plurality of super-pixels facilitates in reduction of computational complexity associated with assigning labels to the plurality of pixels/super-pixels of the image. In an example embodiment, an image graph may be constructed on the plurality of super-pixels of a current sub-image of the plurality of sub-images with the super-pixels of the current sub-image and adjacent sub-images as nodes of the graph. In an example embodiment, only those super-pixels of the adjacent sub-images may be utilized as nodes for generating the image graph of the current sub-image that are located in the immediate vicinity of a boundary between the current sub-image and the neighboring sub-image. In an example embodiment, the similarity between any two nodes of the image graph may be computed, for example, by fitting a minimum spanning tree (MST) derived from the sub-image graph for achieving a better efficiency in processing the image graph. Herein, an image graph $G$ may be defined as $G = (N, C)$ where each node $N$ corresponds to a super-pixel belonging to one of the sub-image and a neighboring sub-image located in an immediate vicinity of the sub-image, and each of the one or more connections $C$ represents an edge between two nodes. In an example embodiment, each of the edges or connections $C$ is associated with an edge weight $(W)$ that depends upon the similarity parameter of the two nodes and/or spatial distance between the two nodes.

In an example embodiment, the apparatus 200 is caused to determine the image graph for the image. In an example embodiment, the image graph may include a plurality of connections between the super-pixels of the image. In an example embodiment, the apparatus 200 is caused to determine the plurality of connections of the image graph. In an example embodiment, the apparatus 200 is caused to determine a connection of the plurality of connection, for example, between a first super-pixel and a second super-pixel of the image, where the first super-pixel may belong to a sub-image and the second super-pixel may belong to the sub-image or a neighboring sub-image of the sub-image located in an immediate vicinity of the sub-image in the image.

In an example embodiment, the image graph may include a plurality of sub-image graphs corresponding to the plurality of sub-images of the image. In an example embodiment, the sub-image graph of the plurality of sub-image graphs may include a plurality of nodes, where a node of the plurality of nodes is connected to one or more surrounding nodes of the plurality of nodes through one or more connections. Herein, the nodes of the image graph and/or the sub-image graphs include super-pixels being defined for the image. For example, the first super-pixel and the second super-pixel may be assumed as nodes of a sub-image graph, where the first super-pixel may be assumed to be the node and the second super-pixel may be assumed to be the surrounding node associated with the node.

In an example embodiment, a sub-image graph corresponding to a sub-image may be determined by determining the plurality of nodes and connections between the nodes of the sub-image graph. In an example embodiment, for determining the plurality of nodes of the sub-image graph, the apparatus 200 is caused to access a set of super-pixels labels defined corresponding to the set of pixels associated with the sub-image. In an example embodiment, the set of pixels associated with the sub-image includes the plurality of pixels of the sub-image and a plurality of neighboring pixels associated with the neighboring sub-image. In an example embodiment, the apparatus may further be caused to access a set of super-pixels associated with the sub-image. In an example embodiment, the set of super-pixels comprising the plurality of super-pixels of the sub-image and the plurality of neighboring super-pixels associated with the neighboring sub-image. In an example embodiment, for accessing the set of super-pixels associated with the sub-image, the apparatus 200 may be caused to determine the plurality of super-pixels associated with the current sub-image. In another example embodiment, the apparatus 200 may be caused to access the plurality of super-pixels already defined in the current sub-image and received from sources external to the apparatus 200. In an example embodiment, a processing means may be configured to access the set of super-pixels labels defined corresponding to the set of pixels associated with the sub-image. An example of the processing means may include the processor 202, which may be an example of the controller 108.

In an example embodiment, the apparatus 200 may be caused to determine, based on the set of corresponding super-pixel labels, whether a corresponding super-pixel label associated with a pixel of the plurality of pixels of the current sub-image is present in the set of corresponding super-pixel labels. In an example embodiment, on determining that the corresponding super-pixel label associated with the pixel of the current sub-image is not present in the set of corresponding super-pixel labels, the apparatus 200 is caused to create a new node associated with the corresponding super-pixel label, and add the pixel to the set of nodes. In an example embodiment, a processing means may be configured to determine whether a corresponding super-pixel label associated with a pixel of the plurality of pixels of the current sub-image is present in the set of corresponding super-pixel labels. An example of the processing means may include the processor 202, which may be an example of the controller 108.

In an example embodiment, the apparatus 200 may further be caused to determine, for one or more surrounding pixels surrounding the pixel, whether at least one surrounding pixel of the one or more surrounding pixels is associated with a super-pixel label different from the super-pixel label of the pixel. In an example embodiment, on determination that the at least one surrounding pixel is associated with the super-pixel label different from the super-pixel label of the pixel, the apparatus 200 is caused to add that (different) label to the set of labels associated with the neighboring nodes. In an example embodiment, the apparatus is also caused to add the at least one surrounding pixel to a set of surrounding nodes on determination of the at least one surrounding pixel to be associated with the super-pixel label different from the super-pixel label of the pixel. In an example embodiment, a processing means may be configured to determine whether one or more of the set of neighboring pixels are associated with the same label as that of the pixel. An example of the processing means may include the processor 202, which may be an example of the controller 108.

In an example embodiment, the apparatus 200 is caused to determine the sub-image graph by defining the one or more connections of the sub-image graph. In an example embodiment, the apparatus 200 is caused to define the one or more connections of a node of the plurality of nodes to one or more surrounding nodes of the plurality of nodes, where a node of the one or more surrounding nodes includes a super-pixel belonging to one of the current sub-image and a neighboring sub-image. As already discussed, the neighboring sub-image may be located in an immediate vicinity of the sub-image in the image. It should be noted that the spatial distance between the two nodes that are super-pixels may be a spatial difference between locations of centroids of the two super-pixels. In an example embodiment, a processing means may be configured to determine the one or more connections of the node. An example of the processing means may include the processor 202, which may be an example of the controller 108.

In an example embodiment, the apparatus 200 may be caused to determine corresponding edge weights associated with the one or more connections between the plurality of nodes. In an example embodiment, the corresponding edge weights may be determined based on similarity parameters between the node and the one or more nodes and/or spatial distances between the node and the one or more nodes. For instance, in an example embodiment, edge weights associated with the one or more connections of the node may be determined based on similarity parameters between the node and the one or more nodes. In another example embodiment, the edge weights associated with the one or more connections of the node may be determined based on spatial distances between the node and the one or more nodes. In yet another example embodiment, the edge weights associated with the one or more connections of the node may be determined based on the similarity parameters between the node and the one or more nodes and the spatial distances between the node and the one or more nodes. In an example embodiment, the one or more connections are determined for each node of the plurality of nodes of the image, and all connections for the plurality of nodes form a set of connections of the sub-image. In an example embodiment, the sub-image graph represents the set of connections that connect the plurality of nodes of the sub-image, where each connection of the set of connections has a corresponding edge weight. In an example embodiment, the sub-image graph may be determined by connecting all of the plurality of nodes ($N_1$, $N_2$...$N_n$) of the sub-image in this manner, where each given node is connected to the one or more nodes belonging to a current sub-image or a neighboring sub-image.

In an example embodiment, the sub-image graphs being generated individually for the plurality of sub-images have special properties that enable efficient parallelization of the image graph generation. Herein, the initial super-pixel computation is performed in ways that minimizes the total number of edges in the image graph on super-pixels, thereby reducing the working memory required for performing the computation.

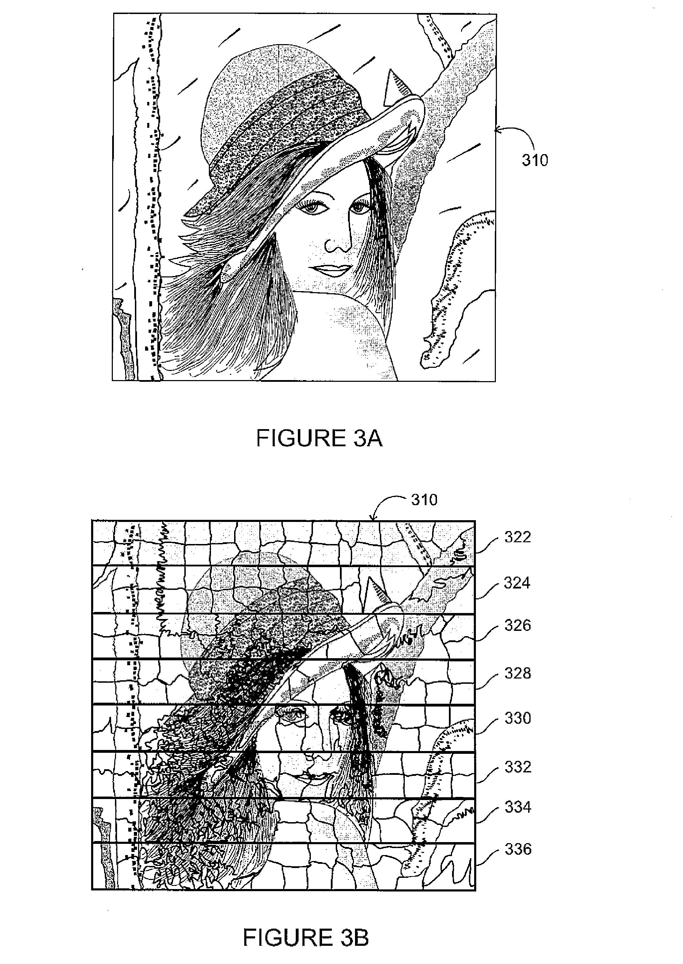

Various suitable techniques may be used for image processing and graph creation/generation. Some example embodiments of image processing and graph creation/generation are explained in following description, however, these example embodiments should not be considered as limiting to the scope of the present technology. Various embodiments of image processing and graph creation/generation, for example, by generation of individual sub-image graphs for a plurality of sub-images of an image are explained further with reference to FIGURES 3A-3C, 4, 5A-5B, and 6. In an example embodiment, the plurality of sub-images may be individually processed, for example, serially or concurrently so as to facilitate in generation of corresponding plurality of sub-image graphs, as is explained in the following description.

FIGURE 3A illustrates an example representation of an image, for example an image 310 to be processed for segmentation and graph generation, in accordance with an example embodiment. In an example embodiment, the image 310 may be captured by an image capturing device (for example, an image capturing device embodying image sensor 208 of FIGURE 2). For the representation purposes, the image 310 is shown as a portrait of a woman. The portrait is shown to include facial features, eyes, hair, hat, and the like of the woman.

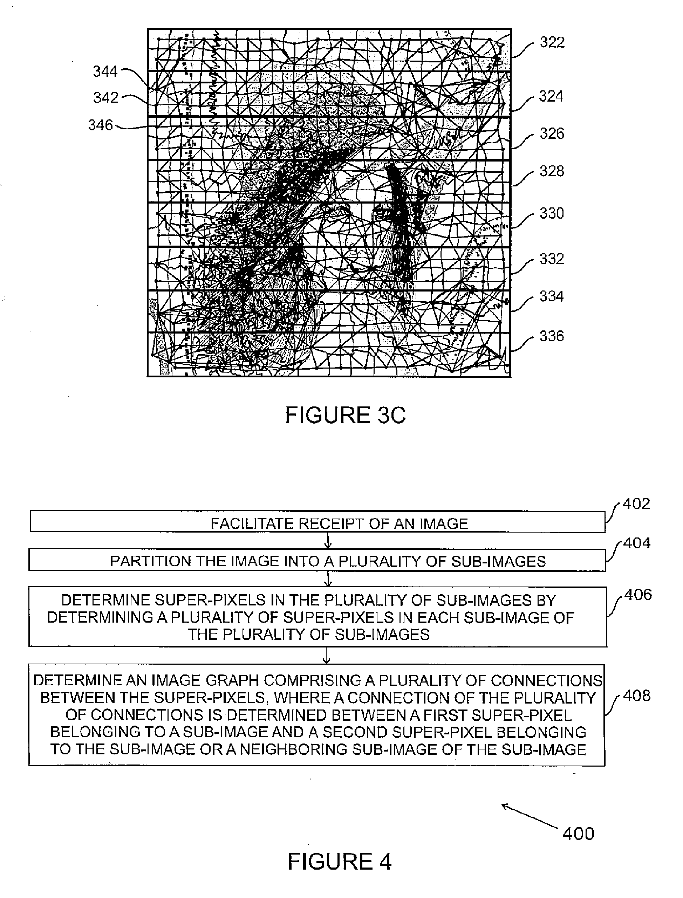

FIGURES 3B and 3C illustrate example representations of segmentation of the image and generation of an image graph corresponding to the image, respectively in accordance with an example embodiment. In an example embodiment, the image 310 may be partitioned into a plurality of sub-images, for example, sub-images 322, 324, 326, 328, 330, 332, 334, and 336. For illustrative purposes, the partitions of the image 310 into the plurality of sub-image are shown by bold lines running horizontally through the image. Herein, the image 310 is shown to be partitioned into a plurality of rows. It should however be noted that in some examples, the image may be partitioned into a plurality of vertical columns. As illustrated herein with reference to FIGURE 3B, the image 310 is partitioned into eight sub-images. It will however be noted that the image 310 may be partitioned into greater or fewer number of sub-images. In various example embodiments, the number, orientation and size of sub-images into which the image may be partitioned may be determined based on the complexity of the graph processing algorithm being utilized in various applications.

In an embodiment, the plurality of sub-images 322, 324, 326, 328, 330, 332, 334, and 336 may be individually segmented into a corresponding plurality of super-pixels. For example, as illustrated in FIGURE 3B, each of the sub-images 322, 324, 326, 328, 330, 332, 334, and 336 are shown to be segmented into a corresponding plurality of super-pixels. As illustrated in FIGURE 3B, each of the plurality of sub-images 322, 324, 326, 328, 330, 332, 334, and 336 is segmented into a same number or a different number of super-pixels. In an example embodiment, the plurality of sub-images may be sequentially or concurrently segmented into the corresponding plurality of super-pixels. In an example embodiment, a sub-image of the plurality of sub-images may be segmented into a plurality of super-pixels in such a manner that the plurality of super-pixels of the sub-image may be restricted to the sub-image only, thereby limiting the number of neighboring super-pixels associated with the plurality of pixels of the sub-image. For example, as illustrated in FIGURE 3B, the plurality of super-pixels of the sub-images, for example the sub-image 322 are restricted to the image portion presented by the sub-image 322.

In an example embodiment, a sub-image graph corresponding to a sub-image of the plurality of sub-image may be generated in such a manner that the nodes of the sub-image graph may belong either to the current sub-image or to a neighboring sub-image located in an immediate vicinity of the current sub-image. An image graph for the image 310 is illustrated with reference to FIGURE 3C.

As shown in FIGURE 3C, while determining the sub-image graph for a sub-image, for example, the sub-image 322, one or more connections may be determined by connecting a given node in the sub-image 322 and one or more surrounding nodes located within the sub-image 322 or neighboring (adjacent) sub-images, for example, the sub-image 324. For example, for determining a sub-image graph corresponding to the sub-image 322, connections between a node 342 in the sub-image 322 and one or more similar nodes such as a node 344 (located in the sub-image 322) and a node 346 (located in the sub-image 324) may be determined. In an example embodiment, the sub-image graphs for the plurality of sub-images 324, 326, 328, 330, 332, 334, and 336 may be determined in a similar manner as is explained for the sub-image 322.

FIGURE 4 is a flowchart depicting an example method 400 for image processing, in accordance with an example embodiment. Example references are made to FIGURES 2 to 3C for the description of the method 400. The method 400 depicted in the flowchart may be executed by, for example, the apparatus 200 of FIGURE 2.

At 402, the method 400 includes facilitating receipt of an image. In an example embodiment, the image may be captured by an image capturing device, for example a camera. Alternatively, the image may be received from external sources accessible to the apparatus 200. At 404, the method 400 includes partitioning the image into a plurality of sub-images. In an example embodiment, the plurality of sub-images may include grids, tiles and the like. In an example embodiment, the image may be partitioned to include a plurality of horizontal rows of the sub-images. In another example embodiment, the image may be partitioned to include a plurality of vertical columns of the sub-images. In an example embodiment, the plurality of sub-images may be of equal size or different sizes.

At 406, the method 400 includes determining super-pixels in the plurality of sub-images. In an example embodiment, the super-pixels in the plurality of sub-images may be determined performing individual processing of the plurality of sub-images. In an example embodiment, the individual processing of a sub-image of the plurality of sub-images facilitates in defining/determining a plurality of super-pixels in each sub-image of the plurality of sub-images. In an example embodiment, the individual processing of the plurality of sub-images may facilitate in reduced working memory size and number of computations in multi-processor platforms, thereby increasing the efficiency of system working on such platforms. In an example embodiment, the individual processing of the plurality of sub-images may be performed concurrently or sequentially. An example of individual processing of the plurality of sub-images is illustrated and explained with reference to FIGURE 3B.

At 408, the method 400 includes determining an image graph having a plurality of connections between the super-pixels of the image. In an example embodiment, a connection of the plurality of connections is determined between a first super-pixel and a second super-pixel, where the first super-pixel may belong to a sub-image and the second super-pixel may belong to the sub-image or a neighboring sub-image of the sub-image. Herein, the neighboring sub-image is located in an immediate vicinity of the sub-image in the image. For example, as illustrated in FIGURES 3A-3C, for the sub-image 322, the sub-image 324 may be the neighboring sub-image, while for the sub-image 324, the sub-image 322 and sub-image 326 may be the neighboring sub-images.

In an example embodiment, the image graph may include a plurality of sub-image graphs corresponding to the plurality of sub-images of the image. In an example embodiment, a sub-image graph of the plurality of sub-image graphs corresponding to a sub-image of the plurality of sub-images may include a plurality of nodes. In an example embodiment, the sub-image graph may be determined by defining/determining one or more connections of a node of the plurality of nodes to one or more surrounding nodes of the plurality of nodes. Herein, the nodes of the image graph and/or the sub-image graphs include super-pixels being defined for the image. For example, the first super-pixel and the second super-pixel may be assumed as nodes of a sub-image graph, where the first super-pixel may be assumed to be the node and the second super-pixel may be assumed to be the surrounding node associated with the node. In an example embodiment, a node of the one or more surrounding nodes includes a super-pixel belonging to one of the sub-image and a neighboring sub-image, where the neighboring sub-image may be located in an immediate vicinity of the sub-image in the image. An example image graph having a plurality of sub-image graphs corresponding to the plurality of sub-images of the image is illustrated and described with reference to FIGURE 3C.

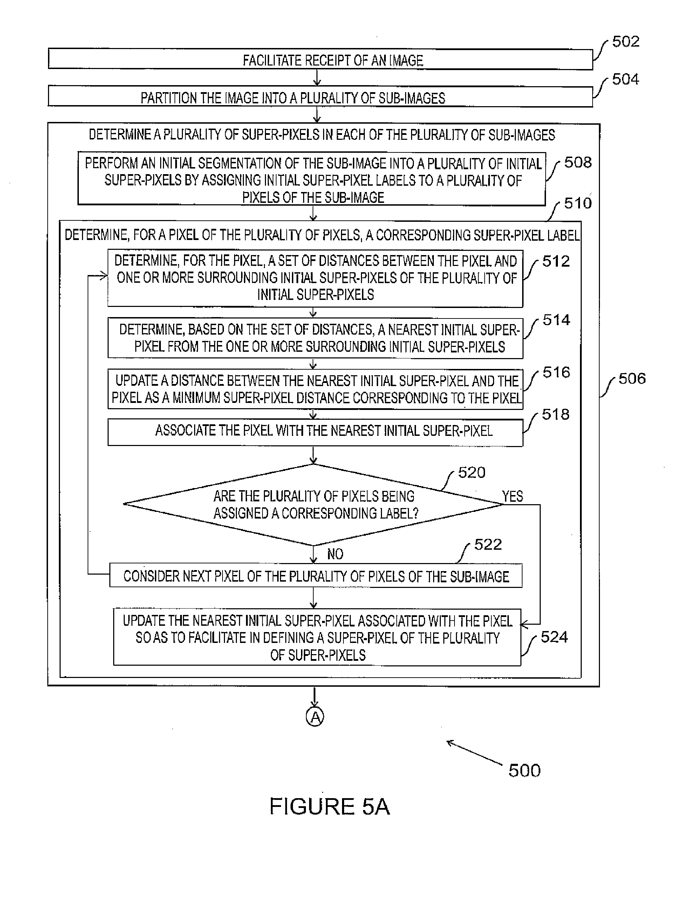

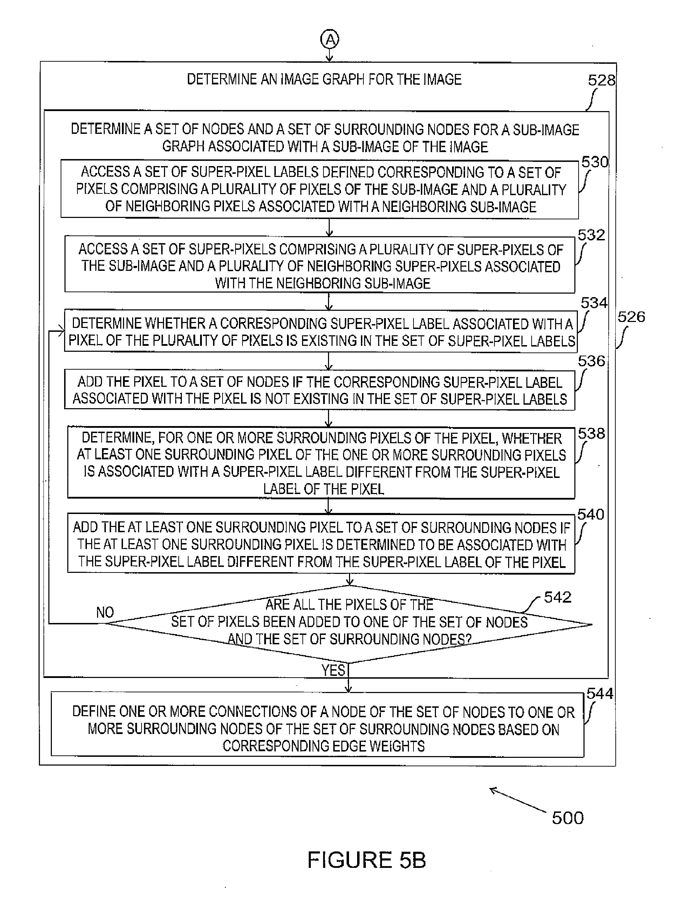

FIGURES 5A and 5B is a flowchart depicting an example method for image processing, in accordance with an example embodiment. Example references are made to FIGURES 2 to 3C for the description of the method 500. The method 500 depicted in the flowchart may be executed by, for example, the apparatus 200 of FIGURE 2.

At 502, the method 500 includes facilitating receipt of an image of a scene. In an example embodiment, the image may be captured by the image capturing device 208. Alternatively, the image may be received from external sources accessible to the apparatus 200. At 504, the method 500 includes partitioning the image into a plurality of sub-images. In an example embodiment, the plurality of sub-images may include grids, tiles and the like. In an example embodiment, the image may be partitioned to include a plurality of horizontal rows of the sub-images. In another example embodiment, the image may be partitioned to include a plurality of vertical columns of the sub-images. In an example embodiment, the plurality of sub-images may be of equal size. In an example embodiment, the plurality of sub-images may be of unequal sizes. In an example embodiment, the image may be partitioned into the plurality of sub-images in any suitable orientation and/or size.

At 506, the method 500 includes, performing, individual processing of the plurality of sub-images. In an example embodiment, the individual processing of the plurality of sub-images facilitates in segmenting the plurality of sub-images so as to define super-pixels in the plurality of sub-images. In an example embodiment, a sub-image of the plurality of sub-images may include a plurality of pixels, such that the processing of the sub-image may facilitate in defining a plurality of super-pixels in the sub-image of the plurality of sub-images. The segmentation of the sub-image into the plurality of super-pixels facilitates in reducing the complexity of various image and/or video processing tasks involving processing of the image. In an example embodiment, the segmentation of the sub-image may include assigning corresponding super-pixel labels to the plurality of pixels of the corresponding sub-images such that the pixels with the same super-pixel label may have same visual characteristics. In an example embodiment, the individual processing of the plurality of sub-images facilitates in interaction of the plurality of super-pixels of the neighboring sub-images located in immediate vicinity of the sub-image.

In an example embodiment, the method at 506 may be performed for the plurality of sub-images in a serial manner or concurrently. For example, in an example scenario, the plurality of sub-images may be simultaneously processed so as to segment each of the plurality of sub-images into a corresponding plurality of super-pixels. In another example scenario, the plurality of sub-images may be processed serially (or sub-image by sub-image) so as to segment each of the plurality of sub-images into the corresponding plurality of super-pixels one after another. An example method for segmenting the plurality of sub-images into a plurality of super-pixels is defined by 508 - 524 of method 506.

At 508, the method 506 includes determining super-pixels in the plurality of sub-images. In an example embodiment, determining the super-pixels includes determining a plurality of super-pixels in each sub-image of the plurality of sub-images. In an example embodiment, the plurality of super-pixels in each sub-image may be determined by performing an initial segmentation of the sub-image into a plurality of initial super-pixels. In an example embodiment, the initial segmentation of the sub-image may be performed by randomly initializing the plurality of initial super-pixels in the sub-image. In an example embodiment, initial segmentation of the sub-image may be performed based at least on a characterization of a visual appearance of the initial super-pixels in the sub-image. For example, the pixels of the initial super-pixel may be similar with respect to at least one visual property, for example, color, texture, intensity, and the like. In an example embodiment, performing the initial segmentation of the sub-image into the plurality of initial super-pixels may include assigning a respective super-pixel label to the plurality of pixels of the sub-image. In an example embodiment, the plurality of pixels of the sub-image may be assigned corresponding super-pixel labels in a random manner. In an example embodiment, for a super-pixel of the plurality of initial super-pixels, a corresponding centroid is determined based on a pixel located centrally in the initial super-pixel. In an example embodiment, the pixel located centrally in the initial super-pixel may be associated with a color value. In an example embodiment, a color value of the pixel located centrally in the initial super-pixel may be determined. In an example embodiment, the color value of the pixel located centrally in the initial super-pixel may be determined as an average color value of the initial super-pixel. In an example embodiment, the location and color values may be determined for the plurality of initial super-pixels being generated based on the initial segmentation of the image to thereby assign initial super-pixel labels to the plurality of initial super-pixels of the sub-image. In an example embodiment, the method at 508 is performed for the plurality of sub-images to thereby generate a corresponding plurality of initial super-pixels associated with the plurality of sub-images.

In an example embodiment, the initial super-pixel labels assigned to the corresponding plurality of initial super-pixels of the plurality of sub-images may be refined. In an example embodiment, the initial super-pixel labels may be updated/refined by computing labels for the corresponding plurality of pixels associated with the plurality of sub-images. In an example embodiment, the initial super-pixel labels assigned to the corresponding plurality of pixels are updated by iteratively identifying nearest initial super-pixels associated with the pixels of the plurality of pixels, and updating location information and color values associated with the identified initial super-pixels based on the location information and color values associated with the pixels. In an example embodiment, the super-pixel labels for the plurality of pixels of a sub-image of the plurality of sub-images may be determined at 510 of the method 500.

At 512, the method 510 includes determining, for a pixel of the plurality of pixels of the super-pixel, a set of distances between the pixel and one or more surrounding initial super-pixels of the plurality of initial super-pixels. In an example embodiment, a distance between the two pixels, for example the pixel and a pixel of the surrounding initial super-pixel may be representative of one or more dissimilarity metrics between the two pixels. In an example embodiment, the distance between the pixel and the pixel of the surrounding initial super-pixel may be computed as a distance between the pixel and a central pixel of the surrounding initial super-pixel. In an example embodiment, the distance between the pixel and a surrounding super-pixel of the one or more surrounding initial super-pixels includes determining a distance between the pixel and a centroid of the surrounding initial super-pixel.

At 514, the method 510 includes determining, based on the set of distances, a nearest initial super-pixel from the one or more surrounding initial super-pixels closest to the pixel. In an example embodiment, the distances of the set of distances may be compared with a threshold distance, and based on the comparison, the nearest initial super-pixel associated with the pixel may be determined. In an example embodiment, a value for the minimum distance associated with the pixels of the plurality of pixels may be set to a high value. In an example embodiment, the distance between the nearest initial super-pixel and the pixel may be updated as a minimum super-pixel distance corresponding to the pixel, at 516. At 518, the pixel may be associated with the nearest initial super-pixel upon updating the distance between the nearest initial super-pixel and the pixel. In an example embodiment, the color value of the super-pixel may be updated based on the color values of the pixels in the super-pixel.

At 520, it may be determined whether the plurality of pixels of the sub-image are assigned a corresponding super-pixel label. On determination that the plurality of pixels are not assigned a corresponding super-pixel label, a next pixel of the plurality of pixels may be considered at 522. Also, the method may iteratively determine, for the plurality of pixels of the sub-image, the neighboring super-pixel to which the plurality of pixels belongs, by following 512-518. In an embodiment, in every iteration, the super pixel labels assigned to every pixel may be updated followed by the updating the location of the initial super-pixel at 524. In an example embodiment, the super-pixel labels assigned to every pixel may be updated based at least on one of a color value and a location information of the pixel. In an example embodiment, the nearest super-pixel associated with a pixel of the plurality of pixels facilitates in defining a super-pixel of the plurality of super-pixels associated with the sub-image.

In an example embodiment, an image graph may be determined/constructed for the image at 526. In an example embodiment, the image graph may include a plurality of sub-image graphs corresponding to the plurality of sub-images of the image. In an example embodiment, a sub-image graph of the plurality of sub-image graphs corresponding to a sub-image of the plurality of sub-images may be generated/determined based on the plurality of super-pixels of the sub-image and super-pixels associated with the surrounding sub-images. In an example embodiment, a sub-image graph of the plurality of sub-image graphs corresponding to a sub-image of the plurality of sub-images may include a plurality of nodes, where a node of the plurality of nodes includes a super-pixel belonging to one of the sub-image and the neighboring sub-image located in an immediate vicinity of the sub-image.

An example method for constructing the image graph is explained by 528-544. In an example embodiment, the image graph may include a plurality of connections between the super-pixels of the image. In an example embodiment, a connection of the plurality of connection, for example, between a first super-pixel and a second super-pixel of the image may be determined, where the first super-pixel may belong to a sub-image and the second super-pixel may belong to the sub-image or a neighboring sub-image of the sub-image located in an immediate vicinity of the sub-image in the image. In an example embodiment, the method includes constructing a plurality of sub-image graphs corresponding to the plurality of sub-images. In an example embodiment, the sub-image graphs for the plurality of sub-images may be constructed serially or concurrently.

In an example embodiment, each of the sub-image graph may include a plurality of nodes. In an example embodiment, each of the sub-image graph may be generated by defining one or more connections of a node of the plurality of nodes to one or more surrounding nodes of the plurality of nodes. In an example embodiment, a node of the one or more surrounding nodes may include a super-pixel belonging to one of the sub-image and a neighboring sub-image. As already discussed, the neighboring sub-image may be located in an immediate vicinity of the sub-image in the image. Herein, the first super-pixel and the second super-pixel may be assumed as nodes of a sub-image graph, where the first super-pixel may be assumed to be the node and the second super-pixel may be assumed to be the surrounding node associated with the node.

At 528, the method 526 includes determining a set of nodes and a set of surrounding nodes for a sub-image graph associated with a sub-image of the image. The set of nodes and the set of surrounding nodes belong to the plurality of nodes. An example method for determining the set of nodes and the set of surrounding nodes is described with reference to 530-542.

At 530, the method 528 includes accessing a set of super-pixel labels defined corresponding to a set of pixels associated with the sub-image. In an example embodiment, the set of pixels associated with the sub-image includes the plurality of pixels of the sub-image and a plurality of neighboring pixels associated with the neighboring sub-image. In an example embodiment, the plurality of neighboring pixels includes those pixels of the neighboring sub-image that are located in an immediate vicinity of the pixels of the sub-image. For example, the plurality of neighboring pixels may include pixels located close to a boundary between the sub-image and the neighboring sub-image. At 532, the method 528 includes accessing a set of super-pixels associated with the sub-image. The set of super-pixels includes the plurality of super-pixels of the sub-image and a plurality of neighboring super-pixels associated with the neighboring sub-image. In an example embodiment, the plurality of neighboring super-pixels includes those super-pixels of the neighboring sub-image that are located in an immediate vicinity of the pixels of the sub-image. For example, the plurality of neighboring super-pixels may include super-pixels located close to a boundary between the sub-image and the neighboring sub-image.

At 534, the method 528 includes determining, for a pixel from the plurality of pixels of the sub-image, whether a corresponding super-pixel label associated with the pixel is existing in the set of super-pixel labels. At 536, the method 528 includes adding the pixel to the set of nodes if the corresponding super-pixel label associated with the pixel is not existing in the set of super-pixel labels. At 538, the method 528 includes determining, for a surrounding pixel from the set of pixels, whether the surrounding pixel is associated with a different super-pixel label than the super-pixel label. In an example embodiment, the surrounding pixel may refer to a pixel located in a vicinity of a current pixel. At 540, the method 528 includes adding the surrounding pixel to a set of surrounding nodes corresponding to the sub-image if the surrounding pixel is determined to be associated with a different super-pixel label than the super-pixel label of the pixel. Herein, the set of surrounding nodes may represent those nodes of the sub-image graph that may be located in an image portion immediately surrounding the node of the sub-image graph.

At 542, it may be determined whether all the pixels of the set of pixels are added to one of the set of nodes and the set of surrounding nodes. If, at 542 it is determined that the all the pixels of the set of pixels are not added to one of the set of nodes and the set of surrounding nodes, then the remaining pixels are considered and added to one of the set of nodes and the set of surrounding nodes until all of the plurality of pixels are added, at 534-540. If, however, it is determined that the plurality of pixels are added to one of the set of nodes and the set of surrounding nodes, then one or more connections of a node of the set of nodes to one or more surrounding nodes of the set of surrounding nodes may be defined, at 544. In an example embodiment, the one or more connections may be defined based on corresponding edge weights associated with the one or more connections. In an example embodiment, the corresponding edge weights may be determined based at least on one of similarity parameters and spatial distances between the node and the one or more surrounding nodes.

FIGURE 6 is a block diagram representing an example of image processing on a multiprocessor platform 600, in accordance with an example embodiment. In an example embodiment, the multiprocessor platform 600 may be utilized for generation of image graph on an image.

Various image processing applications involve irregular accesses to graph data. So, the design and implementation of data layouts and memory access are important factors for determining utilization of the multiprocessor platform in the image processing applications. In an example embodiment, a convenient memory access may be facilitated on the multiprocessor platform by employing the multiprocessor platform 600 that supports parallel processing. For example, the multiprocessor platform 600 is configured to support parallel processing of a plurality of sub-images of an image, thereby facilitating in efficient parallelization of graph algorithms associated with the plurality of sub-images.

As illustrated in FIGURE 6, the multiprocessor platform 600 includes a plurality of processing units, for example, processing units 602, 604, 606, and 608 where each processing units of the plurality of processing units has a corresponding local cache or memory. For example, the plurality of processing units 602, 604, 606, and 608 have a corresponding memory such as memory units 612, 614, 616, and 618, respectively. In an example embodiment, the plurality of memory units associated with the plurality of processors may be coupled to a main memory, for example, the memory 630 via a bus, for example, a bus 632. In an example embodiment, the plurality of memory units 612, 614, 616 and 618 may be configured to store the data needed for processing of respective tasks assigned to the processing units 602, 604, 606, and 608, respectively. For example, for performing a task, such as segmenting and/or sub-graph generation corresponding to a sub-image $I_n$ into a plurality of super-pixels, the processing unit 604 and the memory unit 614 may be collectively configured to process the sub-image $I_n$. The processing unit 604 may be configured to perform segmentation and/or sub-graph generation corresponding to the sub-image $I_n$, and the memory unit 614 may be configured to store information associated with the pixels and/or super-pixels of the sub-images located adjacent to the sub-image $I_n$, for example, images $I_{n+1}$ and $I_{n-1}$ for facilitating processing of the sub-image $I_n$. In an example embodiment, the multiprocessor platform 600 facilities in provisioning of higher memory bandwidth and higher computation power as compared to platforms employing single processing unit. Thus, the multiprocessor platform 600 may be utilized as an accelerator for various graph processing applications.

The multiprocessor platform 600 disclosed herein facilitates in efficient parallelization of graph algorithms, since for graph generation/creation, the plurality of sub-images have dependency on only immediately neighboring (or adjacent) sub-images only. Such efficient parallelization of graph algorithms facilitates in a great scalability of performance according to the size of image and number of processing units being employed. As disclosed herein, each of the nodes of the graph corresponding to a sub-image have connections (or edges) within the sub-image and/or adjacent sub-images, only. So, the processing of the individual sub-image graph associated with the respective sub-images of the plurality of sub-images may be performed individually, (for example, concurrently or sequentially), by the plurality of processing units, thereby avoiding communication between the sub-images.

The image graph may be utilized for generation of minimum spanning tree (MST) in the graph. For example, the super-pixels may act as nodes of the graph, thereby reducing the segmentation for finding cuts in the respective MSTs corresponding to the plurality of sub-image graphs. Additionally, the edge weights may be defined as a function of color information associated with the super-pixels (acting as nodes). Finally, a pseudo MST for the whole image may be assembled from the MSTs of the plurality of sub-image graphs, thereby providing a possibility of parallelization for various image processing applications involving image graph generation and further image processing based on the image graph. Example image segmentation and graph-generation algorithms being performed on the multiprocessor platform 600 are described herein.

Example algorithm for image segmentation:

```
foreach(sub-image g in image)
{
 initialize segment array, Sg
 repeat multiple times
 {
   initialize segment accumulation array with 0, Sa
   foreach(pixel p in sub-image)
 {
   initialize minimum distance with maximum possible distance, dmin
    foreach(s in Sg)
 {
     compute distance between p and center of segment s, d1
  compute color difference between p and average color of segment s, d2
     distance, d ← d1 + d2 * weight
     if d < dmin then dmin ← d, imin ← segment id, i
    }
   accumulate x, y, color to Sa[imin]
   increase pixel counter in Sa[imin]
   label the pixel p with imin
  }
  update Sg by averaging Sa
 }
}
```

The details of the segmentation algorithm have been explained with reference to the flowchart of FIGURE 5A. Herein, the task being executed by the algorithm is to assign the super-pixel labels to every pixel in each sub-image of the plurality of sub-images. The algorithm is iterative, and iteratively determines a corresponding super-pixel label for the plurality of pixels associated with a sub-image. At first, an initial super-pixel segmentation is performed on a sub-image of the plurality of sub-image to randomly generate an initial plurality of super-pixels (or segments). Also, center locations (or centroids) for the initial plurality of super-pixels are randomly generated. In an example scenario, an average color of every super pixel center may be initialized by a color value of the pixel located at the centroid of the super pixel. In addition, labels are randomly assigned to every pixel of the plurality of pixels.

In the first iteration, a distance (indicative of a dissimilarity parameter) associated with the pixels is set to high value. In every iteration, the algorithm updates the super pixel labels assigned to every pixel followed by updating the super pixel location. For every pixel of a current sub-image, a distance of the pixel from every super-pixel of the plurality of super-pixels is determined. Based on the distance between the pixel and every super-pixel of the plurality of super-pixels, a nearest super-pixel (that is closest to the pixel) is determined. The algorithm then updates the minimum distance associated with the pixel. In this manner, the algorithm determines and updates the nearest super-pixel associated with each of the plurality of pixels. Upon updating the nearest super-pixel associated with each of the plurality of pixels, the algorithm updates the location of every super-pixel by taking an average of location of pixels contained in it, and the color value of every super-pixel by taking an average of color values from the pixels contained in it.

The algorithm for image segmentation may be utilized for an efficient image graph generation for the image. Herein, since the image is segmented into super-pixels such that the super-pixels for each of the sub-image are restricted within the respective sub-image, the graph generation method may be parallelized for the plurality of sub-images. An example algorithm for graph generation is as follows:

Example algorithm for graph generation:

```
foreach (sub-image g in image)
   {
    read pixel labels for g and surrounding pixels around the sub-image, Lg
    read segment array for the image grid and surrounding sub-images, Sg
    initialize list of nodes, G
    foreach (pixel p in Lg)
   {
    create node for Lg(p) and push to G, if not exists, n
    foreach (surrounding pixels ps for p)
   {
   create edge between Lg(ps) and Lg(p) and push to the list of surrounding nodes of n
    }
   }
   foreach (edge e in E) {
    get color of segment one node of e, c1
    get color of segment the other node of e, c2
    set weight w(e) of e as the difference of c1 and c2
   }
   }
```

The details of the graph generation method have been explained with reference to the flowchart of FIGURE 5B. Herein, the task is to create the image graph with super-pixels as nodes and create edges between the nodes based on the geometric locations of the nodes. The algorithm is iterative in nature, meaning thereby that the algorithm would iteratively execute instructions for each of the plurality of sub-images. In a first iteration, the algorithm initializes an empty set of nodes corresponding to a sub-image graph associated with a sub-image. For every node, an associated set of the surrounding nodes to which the node may be connected is determined. For populating the set of nodes, the algorithm is looped over a plurality of pixels associated with a current sub-image and neighboring sub-images located adjacent to the current sub-image. Since the super-pixel label associated with every pixel of the plurality of pixels is known (from the segmentation algorithm), the algorithm determines whether or not the super-pixel label associated with the pixel is present in the set of nodes associated with the sub-image graph. On determination that the super-pixel label associated with the pixel is not present in the set of nodes, the algorithm adds the super-pixel label as a node to the set of nodes. The algorithm also determines whether at least one surrounding pixel of the one or more surrounding pixels is associated with a super-pixel label different from the super-pixel label of the pixel. On determination that at least one surrounding pixel of the one or more surrounding pixels is associated with a super-pixel label different from the super-pixel label of the pixel, the at least one surrounding pixel is added to a set of surrounding nodes associated with the node.

Without in any way limiting the scope, interpretation, or application of the claims appearing below, a technical effect of one or more of the example embodiments disclosed herein is to determine image graph associated with an image. In various embodiments, since the nodes of respective sub-image graph belongs to a corresponding sub-image only, the locality of the surrounding nodes is restricted only to the respective sub-image and/or an adjoining sub-images. Due to the restricted locality of the neighboring nodes, the number of edges of the graph is less than the number of edges in a graph being generated without partitioning the image into the plurality of sub-images. For example, the super-pixels associated with the sub-images are restricted to the sub-image only (without spanning across the boundary of the sub-image), and thus the average length of the border of the super-pixels becomes shortened. In various embodiments, the reduced number of edges in the image graph allows faster processing of various graph algorithms since these graph algorithms run iterative loops according to the edges.

Various embodiments described above may be implemented in software, hardware, application logic or a combination of software, hardware and application logic. The software, application logic and/or hardware may reside on at least one memory, at least one processor, an apparatus or, a computer program product. In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer, with one example of an apparatus described and depicted in FIGURES 1 and/or 2. A computer-readable medium may comprise a non-transitory computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

Although various aspects of the embodiments are set out in the independent claims, other aspects comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are several variations and modifications which may be made without departing from the scope of the present disclosure as defined in the appended claims.

**Claims**

1. A method comprising:

   facilitating receipt of an image of a scene;
   partitioning the image into a plurality of sub-images;
   determining super-pixels in the plurality of sub-images, wherein determining the super-pixels comprises determining a plurality of super-pixels in each sub-image of the plurality of sub-images; and
   determining an image graph comprising a plurality of connections between the super-pixels, wherein a connection of the plurality of connections is determined between a first super-pixel and a second super-pixel, the first super-pixel belonging to a sub-image and the second super-pixel belonging to the sub-image or a neighboring sub-image of the sub-image, the neighboring sub-image being located in an immediate vicinity of the sub-image in the image.

2. The method as claimed in claim 1, wherein defining the plurality of super-pixels in the sub-image comprises assigning corresponding super-pixel labels to a plurality of pixels associated with the sub-image.

3. The method as claimed in claim 2, wherein assigning the corresponding super-pixel labels to the plurality of pixels of the sub-image comprises:

   performing an initial segmentation of the sub-image into a plurality of initial super-pixels;
   determining, for a pixel of the plurality of pixels associated with the sub-image, a set of distances between the pixel and one or more neighboring initial super-pixels of the plurality of initial super-pixels;
   determining, based on the set of distances, a nearest initial super-pixel from the one or more neighboring initial super-pixels closest to the pixel;
   updating a distance between the nearest initial super-pixel and the pixel as a minimum super-pixel distance corresponding to the pixel; and
   associating the pixel with the nearest initial super-pixel upon updating the distance between the nearest initial super-pixel and the pixel.

4. The method as claimed in claim 3, wherein determining a distance of the set of distances between the pixel and a neighboring initial super-pixel of the one or more neighboring initial super-pixels comprises determining a distance between the pixel and a centroid of the neighboring initial super-pixel.

5. The method as claimed in claim 4, wherein the distance between the pixel and the neighboring initial super-pixel being determined based at least on one of color values and location information associated with the pixel and the neighboring initial super-pixel.

6. The method as claimed in claim 5, wherein color value of the neighboring initial super-pixel being determined based on a color value of a central pixel located at the centroid of the neighboring initial super-pixel.

7. The method as claimed in any of claims 3 to 6, further comprising updating the nearest initial super-pixel associated with the pixel based at least on one of a color value and a location information of the pixel, wherein updating the nearest super-pixel facilitates in defining a super-pixel of the plurality of super-pixels associated with the sub-image.

8. The method as claimed in any of claims 1 to 7, wherein determining the image graph comprises determining a plurality of sub-image graphs corresponding to the plurality of sub-images, a sub-image graph of the plurality of sub-image graphs comprising a plurality of nodes, and wherein the plurality of sub-image graphs are determined concurrently or serially.

9. The method as claimed in claim 8, further comprises determining, for the sub-image graph, a set of nodes and a set of surrounding nodes, the set of nodes and the set of surrounding nodes belonging to the plurality of nodes, wherein determining the set of nodes and the set of surrounding nodes comprises:

accessing a set of super-pixel labels defined corresponding to a set of pixels associated with the sub-image, the set of pixels associated with the sub-image comprising the plurality of pixels of the sub-image and a plurality of neighboring pixels associated with the neighboring sub-image;

accessing a set of super-pixels associated with the sub-image, the set of super-pixels comprising the plurality of super-pixels of the sub-image and a plurality of neighboring super-pixels associated with the neighboring sub-image;

determining, for a pixel from the plurality of pixels of the sub-image, whether a corresponding super-pixel label associated with the pixel is existing in the set of super-pixel labels;

adding the pixel to the set of nodes on determination of the corresponding super-pixel label associated with the pixel not existing in the set of super-pixel labels;

determining, for one or more surrounding pixels surrounding the pixel, whether at least one surrounding pixel of the one or more surrounding pixels is associated with a super-pixel label different from the super-pixel label of the pixel; and

adding the at least one surrounding pixel to the set of surrounding nodes on determination of the at least one surrounding pixel to be associated with the super-pixel label different from the super-pixel label of the pixel.

10. The method as claimed in claims 1 or 9, wherein determining the connection between the first super-pixel and the second super-pixel comprises determining corresponding edge weight associated with the connection.

11. The method as claimed in claim 10, wherein the corresponding edge weight associated with the connection is determined based at least on one of similarity parameters and spatial distances between the first super-pixel and the second super-pixel.

12. An apparatus configured to:

facilitate receipt of an image of a scene;

partition the image into a plurality of sub-images;

determine super-pixels in the plurality of sub-images, wherein determining the super-pixels comprises determining a plurality of super-pixels in each sub-image of the plurality of sub-images; and

determine an image graph comprising a plurality of connections between the super-pixels, wherein a connection of the plurality of connections is determined between a first super-pixel and a second super-pixel, the first super-pixel belonging to a sub-image and the second super-pixel belonging to the sub-image or a neighboring sub-image of the sub-image, the neighboring sub-image being located in an immediate vicinity of the sub-image in the image.

13. The apparatus as claimed in claim 12 further configured to perform the method as claimed in any of claims 2 to 11.

14. A computer program product comprising at least one computer-readable storage medium, the computer-readable storage medium comprising a set of instructions, which, when executed by one or more processors, causes an apparatus to:

facilitate receipt of an image of a scene;

partition the image into a plurality of sub-images;

determine super-pixels in the plurality of sub-images, wherein determining the super-pixels comprises determining a plurality of super-pixels in each sub-image of the plurality of sub-images; and

determine an image graph comprising a plurality of connections between the super-pixels, wherein a connection of the plurality of connections is determined between a first super-pixel and a second super-pixel, the first super-pixel belonging to a sub-image and the second super-pixel belonging to the sub-image or a neighboring sub-image of the sub-image, the neighboring sub-image being located in an immediate vicinity of the sub-image in the image.

**15.** The computer program product as claimed in claim 14, wherein the at least one computer-readable storage medium, the computer-readable storage medium comprising a set of instructions, which, when executed by one or more processors, further causes an apparatus to perform the method as claimed in any of claims 2 to 11.

**FIGURE 1**

**FIGURE 2**

FIGURE 3A

FIGURE 3B

344
342
346

322
324
326
328
330
332
334
336

**FIGURE 3C**

| 402 |
| --- |
| FACILITATE RECEIPT OF AN IMAGE |

| 404 |
| --- |
| PARTITION THE IMAGE INTO A PLURALITY OF SUB-IMAGES |

| 406 |
| --- |
| DETERMINE SUPER-PIXELS IN THE PLURALITY OF SUB-IMAGES BY DETERMINING A PLURALITY OF SUPER-PIXELS IN EACH SUB-IMAGE OF THE PLURALITY OF SUB-IMAGES |

| 408 |
| --- |
| DETERMINE AN IMAGE GRAPH COMPRISING A PLURALITY OF CONNECTIONS BETWEEN THE SUPER-PIXELS, WHERE A CONNECTION OF THE PLURALITY OF CONNECTIONS IS DETERMINED BETWEEN A FIRST SUPER-PIXEL BELONGING TO A SUB-IMAGE AND A SECOND SUPER-PIXEL BELONGING TO THE SUB-IMAGE OR A NEIGHBORING SUB-IMAGE OF THE SUB-IMAGE |

400

**FIGURE 4**

FACILITATE RECEIPT OF AN IMAGE /502

PARTITION THE IMAGE INTO A PLURALITY OF SUB-IMAGES /504

DETERMINE A PLURALITY OF SUPER-PIXELS IN EACH OF THE PLURALITY OF SUB-IMAGES

PERFORM AN INITIAL SEGMENTATION OF THE SUB-IMAGE INTO A PLURALITY OF INITIAL SUPER-PIXELS BY ASSIGNING INITIAL SUPER-PIXEL LABELS TO A PLURALITY OF PIXELS OF THE SUB-IMAGE /508

DETERMINE, FOR A PIXEL OF THE PLURALITY OF PIXELS, A CORRESPONDING SUPER-PIXEL LABEL /510

DETERMINE, FOR THE PIXEL, A SET OF DISTANCES BETWEEN THE PIXEL AND ONE OR MORE SURROUNDING INITIAL SUPER-PIXELS OF THE PLURALITY OF INITIAL SUPER-PIXELS /512

DETERMINE, BASED ON THE SET OF DISTANCES, A NEAREST INITIAL SUPER-PIXEL FROM THE ONE OR MORE SURROUNDING INITIAL SUPER-PIXELS /514

UPDATE A DISTANCE BETWEEN THE NEAREST INITIAL SUPER-PIXEL AND THE PIXEL AS A MINIMUM SUPER-PIXEL DISTANCE CORRESPONDING TO THE PIXEL /516

ASSOCIATE THE PIXEL WITH THE NEAREST INITIAL SUPER-PIXEL /518

ARE THE PLURALITY OF PIXELS BEING ASSIGNED A CORRESPONDING LABEL? /520  YES

NO /522

CONSIDER NEXT PIXEL OF THE PLURALITY OF PIXELS OF THE SUB-IMAGE

UPDATE THE NEAREST INITIAL SUPER-PIXEL ASSOCIATED WITH THE PIXEL SO AS TO FACILITATE IN DEFINING A SUPER-PIXEL OF THE PLURALITY OF SUPER-PIXELS /524

/506

Ⓐ

500

# FIGURE 5A

Ⓐ

DETERMINE AN IMAGE GRAPH FOR THE IMAGE                                    528

DETERMINE A SET OF NODES AND A SET OF SURROUNDING NODES FOR A SUB-IMAGE
GRAPH ASSOCIATED WITH A SUB-IMAGE OF THE IMAGE                            530

ACCESS A SET OF SUPER-PIXEL LABELS DEFINED CORRESPONDING TO A SET OF
PIXELS COMPRISING A PLURALITY OF PIXELS OF THE SUB-IMAGE AND A PLURALITY
OF NEIGHBORING PIXELS ASSOCIATED WITH A NEIGHBORING SUB-IMAGE            532

ACCESS A SET OF SUPER-PIXELS COMPRISING A PLURALITY OF SUPER-PIXELS OF
THE SUB-IMAGE AND A PLURALITY OF NEIGHBORING SUPER-PIXELS ASSOCIATED
WITH THE NEIGHBORING SUB-IMAGE                                           534

DETERMINE WHETHER A CORRESPONDING SUPER-PIXEL LABEL ASSOCIATED WITH A
PIXEL OF THE PLURALITY OF PIXELS IS EXISTING IN THE SET OF SUPER-PIXEL LABELS   526

536

ADD THE PIXEL TO A SET OF NODES IF THE CORRESPONDING SUPER-PIXEL LABEL
ASSOCIATED WITH THE PIXEL IS NOT EXISTING IN THE SET OF SUPER-PIXEL LABELS

DETERMINE, FOR ONE OR MORE SURROUNDING PIXELS OF THE PIXEL, WHETHER   538
AT LEAST ONE SURROUNDING PIXEL OF THE ONE OR MORE SURROUNDING PIXELS
IS ASSOCIATED WITH A SUPER-PIXEL LABEL DIFFERENT FROM THE SUPER-PIXEL
LABEL OF THE PIXEL

540

ADD THE AT LEAST ONE SURROUNDING PIXEL TO A SET OF SURROUNDING NODES IF
THE AT LEAST ONE SURROUNDING PIXEL IS DETERMINED TO BE ASSOCIATED WITH
THE SUPER-PIXEL LABEL DIFFERENT FROM THE SUPER-PIXEL LABEL OF THE PIXEL

542

NO ——— ARE ALL THE PIXELS OF THE
SET OF PIXELS BEEN ADDED TO ONE OF THE SET OF NODES
AND THE SET OF SURROUNDING NODES?

YES

544

DEFINE ONE OR MORE CONNECTIONS OF A NODE OF THE SET OF NODES TO ONE OR
MORE SURROUNDING NODES OF THE SET OF SURROUNDING NODES BASED ON
CORRESPONDING EDGE WEIGHTS

500

# FIGURE 5B

FIGURE 6